# EUROPEAN PATENT APPLICATION

(11) **EP 2 253 490 A1**
(43) Date of publication of application: **24.11.2010**
(21) Application number: 10005208.3
(22) Date of filing: 19.05.2010
(51) Int. Cl.: B60G 9/00, B60G 11/46

(54) **Vehicle suspension means**

(30) Priority: 20.05.2009 GB 0908621
(71) Applicant: Hendrickson International Corporation, Itasca, Illinois 60143-1285 (US)
(72) Inventor: Babu, Sathya, Northants NN8 4UZ (GB); Tomlin, Neil, Leicestershire LE16 8LD (GB)
(74) Representative: Houghton, David

(57) **Abstract**

The invention relates to vehicle suspension means, and has for its objective to avoid the need for axle casing walls of increased thickness whilst accommodating torsional loads, and accommodating variations in axle casing profile without the need for all-round welding of an axle clamp. These objections are met in a vehicle suspension system (1) of the trailing arm type comprising an axle clamp (5) to be secured to an axle casing (2), and to which leaf springs (4) extending in one direction are attached, along with co-operating trailing arms extending in the opposition direction, the axle clamp being characterised by a top clamp member (9), a bottom clamp member (10), and two side plate members (11,12) positioned to opposite sides of the top and bottom clamp members, the top and bottom clamp members each having an innermost bearing surface (14) with angled transitional side walls (15) extending to the upright surfaces (16) of the side flanges on which the side walls sit.

## Description

This invention relates to vehicle suspension means, and is particularly but not necessarily concerned with suspension means for heavy duty vehicles where there is a trailing arm extending from an axle to such as air suspension means.

It is ordinarily the case that a vehicle axle for road wheels is sited within an axle casing, and when conventional steel leaf springs are used as a suspension medium, the axle casing is subject only to minor torsion loadings across it. Normal loadings are bending, due to vertical load fluctuations and some torsion within the case due to brake and drive forces. Roll stiffness is provided naturally by the vertical stiffness of the leaf springs, and sometimes supplemented by a small anti-roll bar. However, the high vertical stiffness of the leaf springs provides a relatively rough ride that can be damaging both to the road and the vehicle cargo.

The trend in recent years has been towards air suspension systems in order to improve protection to cargo from road shocks and the road from damage by passage of the vehicle. The simplest and lowest cost air suspension takes the form of a pair of trailing arms rigidly attached to the axle or an axle casing at the same points as the leaf springs. These arms are pivoted at a point forwardly of the axle and extend rearwardly, to an air spring at the rearmost end. Transverse location of the axle is usually by means of a torque rod mounted above the axle and fastened at one end to a chassis rail on the vehicle body and at the other to the axle case.

The air springs, in order to provide the improved ride have a very low vertical stiffness and therefore provide very little roll control, unlike a leaf spring. Roll stiffness thus comes about by the leaning vehicle trying to raise the front pivot of the inner trailing arm and depressing that on the outside of the turn. This imparts a considerable torsion load across the axle casing and if the trailing arms were excessively stiff, then roll stiffness would be too high. Therefore the bending stiffness of these arms is designed to be sufficiently flexible to provide proper control of vehicle lean whilst the vehicle is cornering and this system avoids the need for a separate roll control mechanism, thus reducing cost, weight and complexity.

The torsional loads applied to the axle casing can be accommodated by increasing the casing wall thickness but the disadvantages of that would be a commensurate increase in weight and cost, and neither would be acceptable.

Another problem faced by vehicle builders is that axle casing profiles cannot be guaranteed, and this can and frequently does cause difficulties when attempting to connect leaf springs and trailing arms to an axle casing.

Axle casing profile irregularities can be compensated for if a clamp arrangement is secured on the casing by an all-round weld, but such an arrangement has the attendant problem that the life of the casing is reduced.

The object of the present invention is to provide a vehicle suspension incorporating trailing arms that avoids those disadvantages mentioned above.

According to one aspect of the present invention, a vehicle suspension of the trailing arm type comprises an axle clamp to be secured to an axle casing, and to which leaf springs extending in one direction are attached, along with co-operating trailing arms extending in the opposition direction, the axle clamp being characterised by a top clamp member, a bottom clamp, member, and two side plate members positioned to opposite sides of the top and bottom clamp members, the top and bottom clamp members each having an innermost bearing surface with angled transitional side walls extending to the upright surfaces of the side flanges on which the side walls sit.

Preferably, each side plate member is provided with a generally centrally located window, and the top clamp members may have through holes for clamping bolts that extend to threaded holes in the bottom clamping plate.

Thus, with the side plate members applied to the front and rear walls of an axle casing, they can be secured in place by a weld at the side plate top edge only, and the top and bottom clamp plates strategically positioned, such that clamping bolts can be run through the holes in the top members and into the threaded holes in the bottom member.

By virtue of the provision of angled transitional surfaces on the top and bottom clamp members it matters not that the axle casing is not square and does not have flat top and bottom surfaces, tightening of the bolts provides a locking effect on all four corners of the axle casing, guaranteeing a positive contact between the clamp members and the casing, but with controlled compression to ensure that a collapse of a relatively thin walled axle casing is prevented.

According to a second aspect of the present invention, a method of securing an axle clamp to a vehicle axle casing, comprises forming an axle clamp as separate top and bottom clamp members and separate side plate members, forming the top and bottom clamp members with respective bearing surfaces extending to an angled transitional wall extending to a vertical upright surface, forming each side plate member with a window, applying the side plate members to the front and rear faces of the axle casing, attaching each side plate member to the casing by welding at the respective top edges only, positioning the clamp members on the top and bottom faces of the axle casing, and bolting together the top and bottom clamp members to cause contact between the corners of the axle casing and the angled transitional wall to cause the axle clamp to be held to the axle casing predominantly by friction.

There is an inevitability that during the fabrication of an axle casing, stresses are set up, but such stresses are not transmitted to the clamp by virtue of the provision of windowed side walls that are welded to the casing at their top edges only.

It will be understood that the clamp arrangement of the invention relies essentially on friction between it and the axle casing to transfer axle loads to the suspension system, thereby avoiding those problems known with fully welded constructions.

Once the axle clamp of the invention is secured to an axle casing, both the end section of leaf springs and trailing arms can be connected below the bottom clamp member by auxiliary bolts and auxiliary clamp plates, with the leaf springs extending forwardly to a connection to a chassis member of the vehicle, and the trailing arm extending to air suspension means mounted on the vehicle chassis rearwardly of the axle casing.

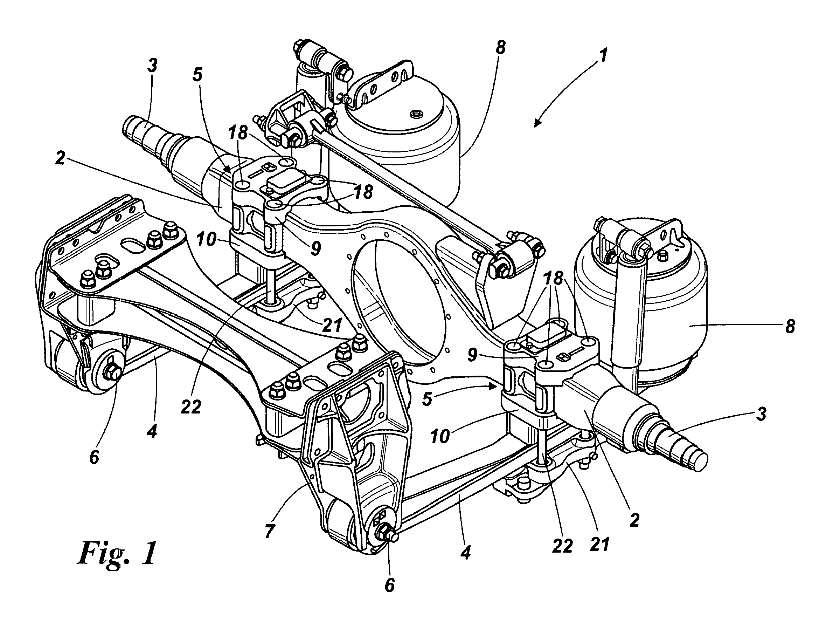

One embodiment of the invention will now be described with reference to the accompanying drawings, in which:-
Figure 1 is a perspective view of a vehicle suspension system incorporating the invention, and
Figure 2 is an exploded perspective view of an axle clamp of Figure 1.

In the drawings, a vehicle suspension 1 has a casing 2 for an axle 3 to which leaf springs 4 are attached by respective clamps 5, the leaf springs 4 extending in the same direction to respective connections 6 to a vehicle chassis member 7, trailing arms (not shown) also connected to a respective clamp 5 extending in the opposite direction and on which respective air springs 8 are mounted.

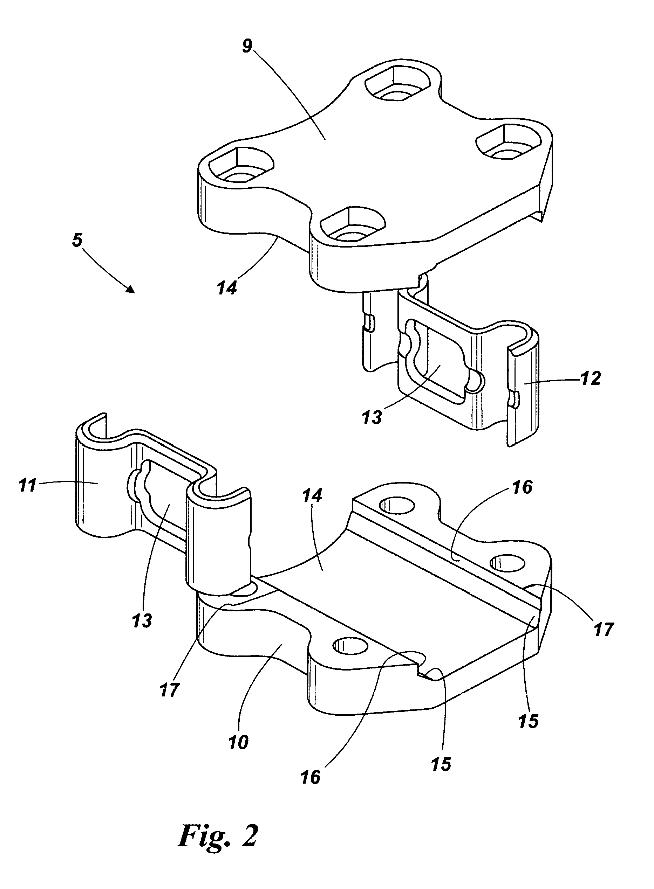

As is shown more particularly by Figure 2 each clamp 5 is formed by top and bottom clamp members 9, 10, and side plate members 11, 12 each having a window 13. The top and bottom clamp members each have opposed (inner) transitional surfaces 14 to opposite sides of which are angled bearing surfaces 15 leading to faces 16 that are perpendicular to the transitional surfaces 14. The faces 16 each extend to an edge 17 to opposite sides of each respective top and bottom clamp members 9, 10 and the clamp members having bolt holes for bolts 18.

As can also be seen in Figure 2, each side plate member 11, 12 is shaped at 19 to allow the passage of a respective bolt 18 and each side member has a window 20.

Thus at the point of assembly of the suspension system, the side plate members 11, 12 of the clamps 5 are positioned in alignment on the front and rear walls of the axle casing 2, the side members having a height commensurate with the depth of the axle casing 2 such that the top and bottom edges of the side plate members are aligned with the top and bottom corners of the axle casing. When so positioned, they are each secured in place by a weld at the top edge only of each side plate member.

The top and bottom clamp members 9, 10 each have a width commensurate with the width of the axle casing 2, and are strategically positioned on the top and bottom faces of the casing 2 such as to be aligned with the side plate members, and the bolts 18 are then run through the respective bolt holes in the top clamp member 9 and through threaded holes in the bottom clamp member 10.

Screwing of the bolts through the threaded holes in the bottom clamp member 10 causes the top and bottom clamp members to engage the casing and the side plate members 11, 12 secured to the casing, and by virtue of the provision of the angled transitional surfaces 14, it is inconsequential that the axle casing is not truly square or does not have flat top and bottom surfaces. Tightening of the bolts provides a locking effect between the transitional surfaces and the corners of the casing with a controlled compression that ensures that a collapse of a relatively thin walled axle casing is prevented.

The provision of windowed side plate members 10, 11 only directly attached to the axle casing by a weld at the respective top edges, the result is that stresses inevitably set up in the axle casing during its construction are not transmitted to the clamp 5. It will also be appreciated that each clamp 5 is held to the axle casing essentially by friction, with then the avoidance of those problems known to be attendant to known fully welded constructions.

Once the axle clamps 5 are in place, forwardly extending leaf springs 4 can have their free ends positioned below the bottom clamp member 10, as can the free end of rearwardly extending trailing arms, and an auxiliary clamp plate 21 applied below the said free ends, and auxiliary bolts 22 run through holes in the auxiliary clamp plate and into threaded holes on the bottom clamp plate 10.

## Claims

1. A vehicle suspension (1) of the trailing arm type **characterised by** an axle clamp (5) to be secured to an axle casing (2), and to which leaf springs (4) extending in one direction are attached, along with co-operating trailing arms extending in the opposition direction, the axle clamp (5) being **characterised by** a top clamp member (9), a bottom clamp member (10), and two side plate members (11, 12) positioned to opposite sides of the top and bottom clamp members, the top and bottom clamp members each having an innermost bearing surface (14) with angled transitional side walls (15) extending to the upright surfaces (16) of the side flanges on which the side walls sit.

2. A vehicle suspension as in Claim 1, **characterised in that** each side plate member (11, 12) is provided with a generally centrally located window (13), and the top clamp members may have through holes for clamping bolts that extend to threaded holes in the bottom clamping plate.

3. A vehicle suspension as in Claim 1 or Claim 2, **characterised in that** the top clamp members (9) have through holes for clamping bolts (18) that extend to threaded holes in the bottom clamp member (10).

4. A vehicle suspension as in any of Claims 1 to 3, **characterised in that** when applied to an axle casing (2), the side plate members (11, 12) are secured in place by a weld at the top edge of each side plate member.

5. A method of securing an axle clamp (5) to a vehicle axle casing (2) **characterised by** forming an axle clamp (5) as separate top (9) and bottom (10) clamp members and separate side plate members (11, 12), forming the top and bottom clamp members with respective bearing surfaces (14) extending to an angled transitional wall (15) extending to a vertical upright surface (16), forming each side plate member with a window (13), applying the side plate members (11, 12) to the front and rear faces of the axle casing (2), attaching each side plate member to the casing by welding at the respective top edges only, positioning the clamp members (9, 10) on the top and bottom faces of the axle casing (2), and bolting together the top and bottom clamp members to cause contact between the corners of the axle casing and the angled transitional wall (15) to cause the axle clamp to be held to the axle casing predominantly by friction.

6. A method as in Claim 1, **characterised in that** the end sections of leaf springs (4) and trailing arms are connected below the bottom clamp members (10) by auxiliary bolts (22) and clamp plates (21), the auxiliary bolts extending to bolt holes on the bottom clamp plate.
